(19) Europäisches Patentamt
European Patent Office
Office européen des brevets

(11) Veröffentlichungsnummer: **0 021 372**
**B1**

(12) # EUROPÄISCHE PATENTSCHRIFT

(45) Veröffentlichungstag der Patentschrift: **07.07.82**

(51) Int. Cl.³: **C 09 B 62/095,** C 09 B 62/255

(21) Anmeldenummer: **80103480.2**

(22) Anmeldetag: **21.06.80**

(54) **Disazokupferkomplex-Reaktivfarbstoffe.**

(30) Priorität: **27.06.79 DE 2925942**

(43) Veröffentlichungstag der Anmeldung: **07.01.81 Patentblatt 81/1**

(45) Bekanntmachung des Hinweises auf die Patenterteilung: **07.07.82 Patentblatt 82/27**

(84) Benannte Vertragsstaaten: **CH DE FR GB LI**

(56) Entgegenhaltungen:
**BE-A-653 180**
**FR-A-1 541 026**
**FR-A-2 330 738**
**US-A-4 128 544**

(73) Patentinhaber: **BAYER AG, Zentralbereich Patente, Marken und Lizenzen, D-5090 Leverkusen 1, Bayerwerk (DE)**

(72) Erfinder: **Jäger, Horst, Dr., Carl-Rumpff-Strasse 37, D-5090 Leverkusen 1 (DE)**

EP 0 021 372 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Disazokupferkomplex-Reaktivfarbstoffe

Gegenstand der Erfindung sind die Kupferkomplexe von Disazofarbstoffen der Formel

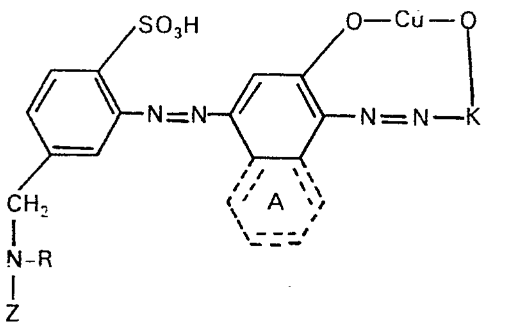

(I)

worin
$R = CH_3$
Z = Mono-, Di- oder Trihalogenpyrimidinylrest, Mono- oder Dihalogentriazinylrest,
K = Rest einer 1-Hydroxy- oder 2-Hydroxy-naphthalinsulfonsäure und
der Benzol- oder Naphthalinkern A weitere Substituenten enthalten kann, insbesondere Chloratome, $C_1$–$C_4$-Alkyl-, $C_1$–$C_4$-Alkoxy- und Sulfogruppen,
sowie Verfahren zu ihrer Herstellung.

Beispiele für Reste Z sind folgende:
Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Äthylamino- oder 2-Propylamino-4-chlortriazinyl-6-, 2-β-Oxäthylamino-4-chlortriazinyl-6-, 2-Di-β-oxäthylamino-4-chlortriazinyl-6- und die entsprechenden Schwefelsäurehalbester, 2-Diäthylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6, 2-(o-, m- oder p-Carboxy- oder Sulfophenyl)-amino-4-chlortriazinyl-6-, 2-Alkoxy-4-chlortriazinyl-6-, wie 2-Methoxy- oder Äthoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor-triazinyl-6-, 2-Alkylmercapto- oder 2-Arylmercapto- oder 2-substituierter Aryl)-mercapto-4-chlortriazinyl-6-, wie 2-β-Hydroxyäthylmercapto-4-chlortriazinyl-6-, 2-Phenylmercapto-4-chlortriazinyl-6-, 3-(4′-Methylphenyl)-mercapto-4-chlortriazinyl-6-, 2-(2′,4′-Dinitro)-phenylmercapto-4-chlortriazinyl-6-, 2-Methyl-4-chlor-triazinyl-6-, 2-Phenyl-4-chlor-triazinyl-6, 2,4-Difluortriazinyl-6, Monofluortriazinylreste, die durch Amino-, Alkylamino-, Aralkylamino-, Arylaminogruppen substituiert sind, wobei Alkyl insbesondere gegebenenfalls substituiertes $C_1$–$C_4$-Alkyl, Aralkyl, insbesondere gegebenenfalls substituierte Phenyl- $C_1$–$C_4$-Alkyl und Aryl insbesondere gegebenenfalls durch Sulfo-, Alkyl-, insbesondere $C_1$–$C_4$-Alkyl, Alkoxy-, insbesondere $C_1$–$C_4$-Alkoxy-, Carbonsäure-, Acylaminogruppen und Halogenatome wie Fluor, Chlor oder Brom substituiertes Phenyl- oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxyethylamino-4-fluor-triazinyl-6, 2-β-Hydroxyethylamino-4-fluor-triazinyl-6, 2-Di(β-hydroxyethylamino)-4-fluor-triazinyl-6, 2-β-Sulfoethylamino-4-fluor-triazinyl-6, 2-β-Sulfoethyl-methylamino-4-fluor-triazinyl-6,
2-Carboxymethylamino-4-fluor-triazinyl-6,
2-β-Cyanethylamino-4-fluor-triazinyl-6,
2-Benzylamino-4-fluor -triazinyl-6,
2-β-Phenylethylamino-4-fluor-triazinyl-6,
2-Benzyl-methylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m, p-Sulfophenyl)-amino-4-fluor-triazinyl-6,
2-(2′,5′-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2′-Methyl-4′-sulfophenyl)-amino-4-fluor-triazinyl-6,
2-(2′-Methyl-5′-sulfophenyl)-amino-4-fluor-triazinyl-6,
2-(2′-Chlor-4′-sulfophenyl)-amino-4-fluor-triazinyl-6,
2-(2′-Chlor-5′-sulfophenyl)-amino-4-fluor-triazinyl-6,
2-(2′-Methoxy-4′-sulfophenyl)-amino-4-fluor-triazinyl-6,
2-(o-, m-, p-Carboxyphenyl)-amino-4-fluor-triazinyl-6,
2-(2′,4′-Disulfophenyl)-amino-4-fluor-triazinyl-6,
2-(3′,5′-Disulfophenyl)-amino-4-fluor-triazinyl-6,
2-(2′-Carboxy-4-sulfophenyl)-amino-4-fluor-triazinyl-6,
2-(6′-Sulfonaphthyl-(2′))-amino-4-fluor-triazinyl-6,
2-(4′,8′-Disulfonaphthyl-(2′))-amino-4-fluor-triazinyl-6,
2-(6′,8′-Disulfonaphthyl-(2′))-amino-4-fluor-triazinyl-6,
2-(N-Methylphenyl)-amino-4-fluor-triazinyl-6,
2-(N-Ethylphenyl)-amino-4-fluor-triazinyl-6,
2-(N-β-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4′,6′,8′-Trisulfonaphthyl-(2′))-4-fluor-triazinyl-6,

2-(3′,6′,8′-Trisulfonaphthyl-(2′))-4-fluor-triazinyl-6,
2-(3′,6′-Disulfonaphthyl-(1′))-4-fluor-triazinyl-6.

Mono-, Di- oder Trihalogenpyrimidinylreste, wie 2,4-Dichlorpyrimidinyl-6-, 2,4-5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, N-Methyl-N-(2,4-Dichlortriazinyl-6-)-carbamyl-, N-Methyl-N-(2-methylamino-4-chlortriazinyl-6-)-carbamyl-, N-Methyl-N-(2-dimethylamino-4-chlortriazinyl-6-)-carbamyl-, N-Methyl- oder N-Äthyl-N-(2,4-dichlortriazinyl-6-)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor -6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl.

Beispiele für Benzol- oder Naphthalinkerne A sind folgende:

1-Amino-2-methoxy-benzol (entmethylierende Kupferung),
1-Amino-2-methoxy-5-methyl-benzol (entmethylierende Kupferung),
1-Amino-2,5-dimethoxy-benzol (entmethylierende Kupferung),
1-Amino-6- oder-7-sulfo-naphthalin (oxydative Kupferung).

OH

Geeignete Kupplungskomponenten H-K sind beispielsweise:)
1-Hydroxy-5-sulfo-naphthalin, 1-Hydroxy-3,6-disulfo-naphthalin, 1-Hydroxy-3,7-disulfo-naphthalin, 1-Hydroxy-3,8-disulfo-naphthalin, 1-Hydroxy-4,6-disulfo-naphthalin, 1-Hydroxy-4,7-disulfo-naphthalin, 1-Hydroxy-4,8-disulfo-naphthalin, 1-Hydroxy-3,5-disulfo-naphthalin, 2-Hydroxy-3,6-disulfo-naphthalin, 2-Hydroxy-5,7-disulfo-naphthalin, 2-Hydroxy-5-, -6- oder -7-sulfo-naphthalin, 1-Hydroxy-4-sulfo-naphthalin.

Bevorzugte Farbstoffe entsprechen der Formel

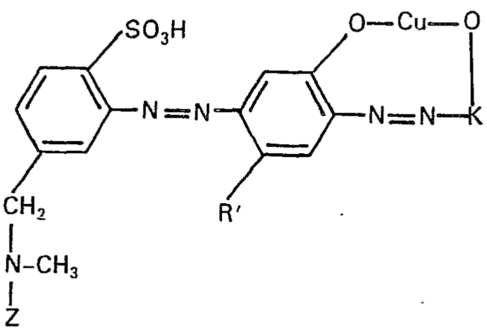

(II)

worin
R′ = H oder $CH_3$

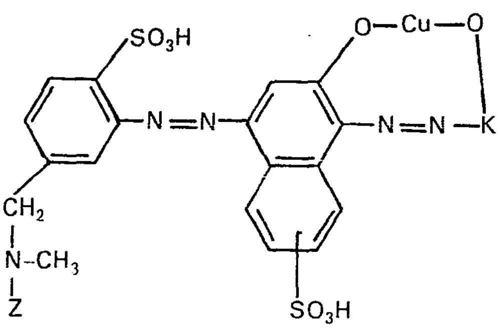

(III)

sowie solche der Formeln I–III, in denen
Z = 2-Fluor-5,6-dichlor-pyrimidinyl-4,
2,6-Difluor-5-chlor-pyrimidinyl-4,
2-Fluor-4-amino-triazinyl-6,
2-Fluor-4-methylamino-triazinyl-6,
2-Fluor-4-(2′,3′- oder 4′-sulfophenylamino)-triazinyl-6,
2-Fluor-4-(2′-methyl-4′- oder 5′-sulfophenylamino)-triazinyl-6,
2-Fluor-4-(2′-chlor-4′- oder 5′-sulfophenylamino)-triazinyl-6,
2-Fluor-4-(2′-sulfo-4′-methoxyphenylamino)-triazinyl-6.

Die Farbstoffe der Formel (I) können hergestellt werden, indem man Farbstoffe der Formel

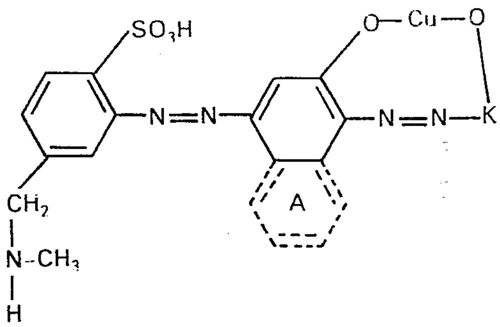

(IV)

mit Reaktivkomponenten Y-Z (V), wobei Y einen als Anion abspaltbaren Substituenten bedeutet, acyliert.

Die Reaktionstemperaturen können z.B. zwischen 0 und 80°C je nach Reaktionsfähigkeit der Reaktivkomponente Y-Z variieren. Die Umsetzung wird vorteilhaft in schwach alkalischem bis neutralem Bereich durchgeführt. Der bevorzugte pH-Wert liegt zwischen 7 und 9.

Hierfür geeignete Reaktivkomponenten der Formel V sind beispielsweise solche, die den vorgenannten Reaktivgruppen zugrundeliegen, d.h. im allgemeinen die Halogenide, insbesondere die Chloride der genannten Acylkomponenten Z. Aus der grossen Zahl der zur Verfügung stehenden Verbindungen seien hier auszugsweise erwähnt:

Trihalogen-symmetrische-triazine, wie Cyanurchlorid und Cyanurbromid, Dihalogenmonoamino- und monosubstituierte-aminosymmetrische Triazine, wie 2,6-Dichlor-4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl)-aminotriazin, 2,6-Dichlor-4-(2′,3′,2′,4′,3′,4′- oder -3′,5′-disulfophenyl)-aminotriazin, Dihalogen-alkoxy- und aryloxy-sym.triazine, wie 2,6-Dichlor-4-methoxytriazin, 2,6-Dichlor-4-ethoxytriazin, 2,6-Dichlor-4-phenoxytriazin, 2,6-Dichlor-4-(o-, m- oder p-sulfophenyl)-oxytriazin, Dihalogen-alkylmercapto- und -arylmercapto sym.-triazine, wie 2,6-Dichlor-4-ethylmercapto-triazin, 2,6-Dichlor-4-phenylmercaptotriazin, 2,6-Dichlor-4-(p-methylphenyl)-mercaptotriazin, 2,4,6- Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2′,5′-disulfophenyl)-amino-triazin, 2,4-Difluor-6-(6′-sulfonaphthyl-2′)-amino-triazin, 2,4-Difluor-6-(o-, m-, n-ethylphenyl)amino-triazin, 2,4-Difluor-6-(o-, m-, p-chlorphenyl)-amino-triazin, 2,4-Difluor-6-(o-, m-, p-methoxyphenyl)amino-triazin, 2,4-Difluor-6-(2′-methyl-5-sulfophenyl)-amino-triazin, 2,4-Difluor-6-(′-methyl-4′-sulfophenyl)-amino-triazin, 2,4-Difluor-6-(2′-chlor-4′-sulfophenyl)-amino-triazin, 2,4-Difluor-6-(2′-chlor-5′-sulfophenyl)-amino-triazin, 2,4-Difluor-6-(2′-methoxy-4′-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Difluor-6-(N-ethyl-phenyl)-amino-triazin, 2,4-Difluor-6-(N-isopropylphenyl)-amino-triazin, 2,4-Difluor-6-cyclohexylamino-triazin, 2,4-Difluor-6-morpholinotriazin, 2,4-Difluor-6-piperpidino-triazin, 2,4-Difluor-6-benzylamino-triazin, 2,4-Difluor-6-N-methyl-benzylaminotriazin, 2,4-Difluor-6-β-phenylethyl-amino-triazin, 2,4-Difluor-6-(N-sulfo-benzyl)-amino-triazin, 2,4-Difluor-6-(2′,4′-disulfophenyl)-amino-triazin, 2,4-Difluor-6-(3′,5′-disulfophenyl)-amino-triazin, 2,4-Difluor-6-(′-carboxy-4′-sulfophenyl)-amino-triazin, 2,4-Difluor-6-(2′,5′-disulfo-4-methoxyphenyl)-amino-triazin, 2,4-Difluor-(2′-methyl-4′,6′-disulfophenyl)-amino-triazin, 2,4-Difluor-(6′,8′-disulfonaphthyl-(2′))-amino-triazin, 2,4-Difluor-(4′,8′-disulfonaphthyl-(2′))-amino-triazin, 2,4-Difluor-(4′,6′,8′-trisulfo-naphthyl-(2′))-amino-triazin, 2,4-Difluor-(3′,6′,8′-trisulfonaphthyl-(2′))-amino-triazin, 2,4-Difluor-(3′,6′-disulfonaphthyl-(1′))-amino-triazin, 2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxy-ethylamino-triazin, 2,4-Difluor-6-dimethylamino-triazin, 2,4-Difluor-6-diethylamino-triazin, 2,4-Difluor-6-iso-propylamino-triazin, Tetrahalogenpyrimidine, wie Tetrachlor-, Tetrabrom- oder Tetrafluorpyrimidin, 2,4,6-Trihalogenpyrimidine, wie 2,4,6-Trichlor-, Tribrom- oder -Trifluor-pyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy- oder -5-carboethoxy- oder -5-carboxymethyl- oder -5-mono-, -di- oder trichlormethyl- oder -5-carboxy- oder -5-sulfo- oder -5-cyano- oder -5-vinylpyridin, 2,4-Difluor-6-methylpyrimidin, 2,6-Difluor-4-methyl-5-chlorpyrimidin, 2,4-Difluor-pyrimidin-5-ethylsulfon, 2,6-Difluor-4-chlor-pyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trifluor-6-methylpyrimidin, 2,4-Difluor-5-nitro-6-chlorpyrimidin, 2,4-Difluor-5-cyanpyrimidin, 2,4-Difluor-5-methyl-pyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluor-methylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbonmethoxy-pyrimidin, 2,4-Difluor-6-trifluormethylpyrimidin, 2,4-Difluor-6-carbonamido-pyrimidin, 2,4-Difluor-6-carbomethoxypyrimidin,

2,4-Difluor-6-phenyl-pyrimidin, 2,4-Difluor-6-cyanpyrimidin, 2,4,6-Trifluor-5-methylsulfonyl-pyrimidin, 2,4-Difluor-5-sulfonamido-pyrimidin, 2,4-Difluor-5-chlor-carbomethoxy-pyrimidin, 5-Trifluormethyl-2,4-difluorpyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid.

Die neuen Farbstoffe eignen sich zum Färben und Bedrucken von Hydroxyl- oder Amidgruppen enthaltenden Materialien wie Textilfasern-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmässigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln der Farbstoffe sind die der entsprechenden freien Säuren. Die Farbstoffe werden im allgemeinen in Form der Alkalisalze, insbesondere der Na-Salze isoliert und zum Färben eingesetzt.

Beispiel 1

72,7 g Aminodisazofarbstoff der Formel

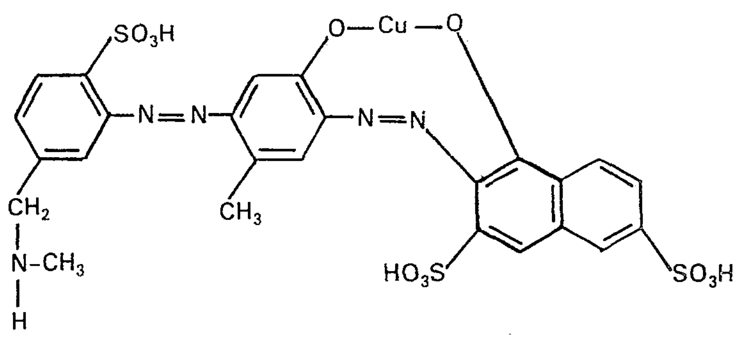

werden bei pH 7 in 60 ml Wasser von 15°C verrührt. Innerhalb ½ Stunde tropft man 16,9 g 2,4,6-Trifluor-5-chlorpyrimidin ein und hält gleichzeitig durch Zugabe von verdünnter Natronlauge den pH zwischen 8 und 9. Der Farbstoff geht während der Acylierung in Lösung. Nachdem man sich durch ein Dünnschichtchromatogramm vom Ende der Reaktion überzeugt hat, wird der Farbstoff ausgesalzen und abfiltriert. Nach dem Trocknen im Vakuum bei 70° und anschliessendem Vermahlen erhält man ein dunkles Pulver, das sich in Wasser mit blauer Farbe löst und Baumwolle und Fasern aus regenerierter Cellulose nach einem für Reaktivfarbstoffe üblichen Applikationsverfahren in marineblauen Tönen von sehr guten Licht- und Nassechtheiten färbt. Der Farbstoff ist ätzbar.

Der Ausgangsfarbstoff wird erhalten, indem man 1-Amino-2-sulfo-5-N-methylaminomethyl-benzol in wässriger Phase bei 0° und pH 8,5–9,5 mit Acetanhydrid selektiv an der aliphatischen Aminogruppe acetyliert. Daraus wird die Diazoverbindung hergestellt und diese im schwach sauren Medium mit 1-Amino-2-methoxy-5-methyl-benzol gekuppelt. Der resultierende Aminoazofarbstoff wird diazotiert und im bicarbonatalkalischen Bereich auf 1-Hydroxy-3,6-disulfo-naphthalin gekuppelt. Anschliessend wird der Disazofarbstoff entmethylierend gekupfert. Nach Verseifung der Acetylaminogruppe durch Erwärmen mit Natronlauge erhält man den kupferhaltigen Aminodisazofarbstoff.

Nach der Arbeitsweise dieses Beispiels werden gleichfalls Farbstoffe mit ähnlichen Eigenschaften erhalten, wenn man anstelle von 1-Amino-2-methoxy-5-methyl-benzol eine der in Spalte 1 aufgeführten Mittelkomponenten, anstelle von 1-Hydroxy-3,6-disulfo-naphthalin eine der in Spalte 2 genannten Endkomponenten und anstelle von 2,4,6-Trifluor-5-chlor-pyrimidin eine der in Spalte 3 beschriebenen Reaktivkomponenten einsetzt.

| Beispiel | Mittelkomponente | Endkomponente | Reaktivkomponente |
|---|---|---|---|
| 2 | 1-Amino-2-methoxy-5-methyl-benzol | 1-Hydroxy-3,6-disulfo-naphthalin | 2,4-Difluor-5,6-dichlor-pyrimidin |
| 3 | 1-Amino-2-methoxy-5-methyl-benzol | 1-Hydroxy-3,6-disulfo-naphthalin | 2,4,5,6-Tetrachlor-pyrimidin |
| 4 | 1-Amino-2-methoxy-5-methyl-benzol | 1-Hydroxy-3,6-disulfo-naphthalin | 2-Methylsulfonyl-4,5-dichlor-6-methyl-pyrimidin |
| 5 | 1-Amino-2-methoxy-5-methyl-benzol | 1-Hydroxy-3,6-disulfo-naphthalin | 2-Amino-4,6-difluor-triazin |
| 6 | 1-Amino-2-methoxy-5-methyl-benzol | 1-Hydroxy-3,6-disulfo-naphthalin | 2-Methylamino-4,6-difluor-triazin |

| Beispiel | Mittelkomponente | Endkomponente | Reaktivkomponente |
|---|---|---|---|
| 7 | 1-Amino-2-methoxy-5-methyl-benzol | 1-Hydroxy-3,6-disulfo-naphthalin | 2-Phenylamino-4,6-difluor-triazin |
| 8 | 1-Amino-2-methoxy-5-methyl-benzol | 1-Hydroxy-3,6-disulfo-naphthalin | 2-(3'-Sulfophenylamino)-4,6-difluor-triazin |
| 9 | 1-Amino-2-methoxy-5-methyl-benzol | 1-Hydroxy-3,6-disulfo-naphthalin | 2-(4'-Sulfophenylamino)-4,6-difluor-triazin |
| 10 | 1-Amino-2-methoxy-5-methyl-benzol | 1-Hydroxy-3,6-disulfo-naphthalin | 2-(2'-Methyl-5'-sulfophenyl-amino)-4,6-difluortriazin |
| 11 | 1-Amino-2-methoxy-5-methyl-benzol | 1-Hydroxy-3,6-disulfo-naphthalin | 2-(2'-Chlor-4'-sulfophenyl-amino)-4,6-difluortriazin |
| 12 | 1-Amino-2-methoxy-5-methyl-benzol | 1-Hydroxy-3,6-disulfo-naphthalin | 2-(2'-Sulfo-4'-methoxyphenyl-amino)-4,6-difluortriazin |
| 13 | 1-Amino-2-methoxy-5-methyl-benzol | 1-Hydroxy-3,6-disulfo-naphthalin | 2-(2'-Sulfophenylamino)-4,6-difluor-triazin |
| 14 | 1-Amino-2-methoxy-5-methyl-benzol | 1-Hydroxy-3,6-disulfo-naphthalin | 2-(6'-Sulfonaphthylamino)-4,6-difluor-triazin |
| 15 | 1-Amino-2-methoxy-5-methyl-benzol | 1-Hydroxy-3,6-disulfo-naphthalin | 2-Methoxyethoxy-4,6-difluor-triazin |
| 16 | 1-Amino-2-methoxy-5-methyl-benzol | 1-Hydroxy-3,6-disulfo-naphthalin | 2-Amino-4,6-dichlor-triazin |
| 17 | 1-Amino-2-methoxy-5-methyl-benzol | 1-Hydroxy-3,6-disulfo-naphthalin | 2-Methylamino-4,6-dichlor-triazin |
| 18 | 1-Amino-2-methoxy-5-methyl-benzol | 1-Hydroxy-3,6-disulfo-naphthalin | 2-Phenylamino-4,6-dichlor-triazin |
| 19 | 1-Amino-2-methoxy-5-methyl-benzol | 1-Hydroxy-3,6-disulfo-naphthalin | 2-(3'-Sulfophenylamino)-4,6-dichlor-triazin |
| 20 | 1-Amino-2-methoxy-5-methyl-benzol | 1-Hydroxy-3,6-disulfo-naphthalin | 2-(4'-Sulfophenylamino)-4,6-dichlor-triazin |
| 21 | 1-Amino-2-methoxy-5-methyl-benzol | 1-Hydroxy-3,6-disulfo-naphthalin | 2-(2'-Methyl-5'-sulfophenyl-amino)-4,6-dichlor-triazin |
| 22 | 1-Amino-2-methoxy-5-methyl-benzol | 1-Hydroxy-3,6-disulfo-naphthalin | 2-N-Methylphenylamino-4,6-dichlor-triazin |
| 23 | 1-Amino-2-methoxy-5-methyl-benzol | 1-Hydroxy-4,8-disulfo-naphthalin | 2,4,6-Trifluor-5-chlor-pyrimidin |
| 24 | 1-Amino-2-methoxy-5-methyl-benzol | 1-Hydroxy-4,8-disulfo-naphthalin | 2,4-Difluor-5,6-dichlor-pyrimidin |
| 25 | 1-Amino-2-methoxy-5-methyl-benzol | 1-Hydroxy-4,8-disulfo-naphthalin | 2-Amino-4,6-difluortriazin |
| 26 | 1-Amino-2-methoxy-5-methyl-benzol | 1-Hydroxy-4,8-disulfo-naphthalin | 2-(3'-Sulfophenylamino)-4,6-difluor-triazin |
| 27 | 1-Amino-2-methoxy-5-methyl-benzol | 1-Hydroxy-4,8-disulfo-naphthalin | 2-(4'-Sulfophenylamino)-4,6-difluor-triazin |
| 28 | 1-Amino-2-methoxy-5-methyl-benzol | 1-Hydroxy-4,8-disulfo-naphthalin | 2-(2'-Methyl-5'-sulfophenyl-amino)-4,6-difluortriazin |
| 29 | 1-Amino-2-methoxy-5-methyl-benzol | 1-Hydroxy-4,8-disulfo-naphthalin | 2-(2'-Chlor-4'-sulfophenyl-amino)-4,6-difluortriazin |
| 30 | 1-Amino-2-methoxy-5-methyl-benzol | 1-Hydroxy-4,7-disulfo-naphthalin | 2,4,6-Trifluor-5-chlor-pyrimidin |
| 31 | 1-Amino-2-methoxy-5-methyl-benzol | 1-Hydroxy-4,7-disulfo-naphthalin | 2-(2'-Sulfophenylamino)-4,6-difluor-triazin |
| 32 | 1-Amino-2-methoxy-5-methyl-benzol | 1-Hydroxy-4,7-disulfo-naphthalin | 2-(3'-Sulfophenylamino)-4,6-difluor-triazin |
| 33 | 1-Amino-2-methoxy-5-methyl-benzol | 1-Hydroxy-5-sulfo-naphthalin | 2-(2'-Sulfophenylamino)-4,6-difluor-triazin |
| 34 | 1-Amino-2-methoxy-5-methyl-benzol | 1-Hydroxy-4-sulfo-naphthalin | 2-(2'-Sulfophenylamino)-4,6-difluor-triazin |
| 35 | 1-Amino-2-methoxy-5-methyl-benzol | 2-Hydroxy-3,6-disulfo-naphthalin | 2-Amino-4,6-difluortriazin |
| 36 | 1-Amino-2-methoxy-5-methyl-benzol | 2-Hydroxy-5,7-disulfo-naphthalin | 2-Amino-4,6-difluortriazin |

Beispiel 37

84,3 g Aminodisazofarbstoff der Formel

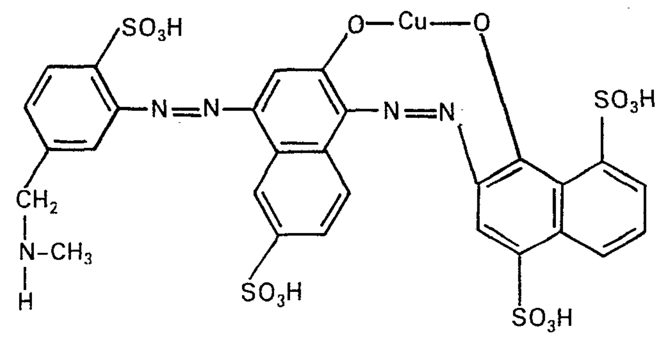

werden bei pH 7 in 600 ml Wasser von 15°C verrührt. Innerhalb ½ Stunde tropft man 16,9 g 2,4,6-Trifluor-5-chlorpyrimidin ein und hält gleichzeitig durch Zugabe von verdünnter Natronlauge den pH zwischen 8 und 9. Der Farbstoff geht während der Acylierung in Lösung. Nachdem man sich durch ein Dünnschichtchromatogramm vom Ende der Reaktion überzeugt hat, wird der Farbstoff ausgesalzen und abfiltriert. Nach dem Trocknen im Vakuum bei 70°C und anschliessendem Vermahlen erhält man ein dunkles Pulver, das sich in Wasser mit blauer Farbe löst und Baumwolle und Fasern aus regenerierter Cellulose nach einem für Reaktivfarbstoffe üblichen Applikationsverfahren in grünstichig blauen Tönen von sehr guten Licht- und Nassechtheiten färbt. Der Farbstoff ist ätzbar.

Der Ausgangsfarbstoff wird erhalten, indem man 1-Amino-2-sulfo-5-N-methylaminomethylbenzol in wässriger Phase bei 0° und pH 8,5–9,5 mit Acetanhydrid selektiv an der aliphatischen Aminogruppe acetyliert. Daraus wird die Diazoverbindung hergestellt und diese im schwach sauren Medium mit 1-Amino-6-sulfo-naphthalin gekuppelt. Der resultierende Aminoazofarbstoff wird diazotiert und im bicarbonatalkalischen Bereich auf 1-Hydroxy-4,8-disulfonaphthalin gekuppelt. Anschliessend wird der Disazofarbstoff oxydativ gekupfert. Nach Verseifung der Acetylaminogruppe durch Erwärmen mit Natronlauge erhält man den kupferhaltigen Aminodisazofarbstoff.

Nach der Arbeitsweise dieses Beispiels werden gleichfalls Farbstoffe mit ähnlichen Eigenschaften erhalten, wenn man anstelle von 1-Hydroxy-4,8-disulfo-naphthalin eine der in Spalte 2 genannten Endkomponenten und anstelle von 2,4,6-Trifluor-5-chlor-pyrimidin eine der in Spalte 3 beschriebenen Reaktivkomponenten einsetzt.

| Beispiel | Endkomponente | Reaktivkomponente |
|---|---|---|
| 38 | 1-Hydroxy-3,6-disulfonaphthalin | 2,4-Difluor-5,6-dichlor-pyrimidin |
| 39 | 1-Hydroxy-3,6-disulfonaphthalin | 2,4,5,6-Tetrachlor-pyrimidin |
| 40 | 1-Hydroxy-3,6-disulfonaphthalin | 2,4,5,6-Tetrachlor-pyrimidin<br>2-Methylsulfonyl-4,5-dichlor-6-methyl-pyrimidin |
| 41 | 1-Hydroxy-3,6-disulfonaphthalin | 2-Amino-4,6-difluor-triazin |
| 42 | 1-Hydroxy-3,6-disulfonaphthalin | 2-Methylamino-4,6-difluor-triazin |
| 43 | 1-Hydroxy-3,6-disulfonaphthalin | 2-Phenylamino-4,6-difluor-triazin |
| 44 | 1-Hydroxy-3,6-disulfonaphthalin | 2-(3'-Sulfophenylamino)-4,6-difluor-triazin |
| 45 | 1-Hydroxy-3,6-disulfonaphthalin | 2-(4'-Sulfophenylamino)-4,6-difluor-triazin |
| 46 | 1-Hydroxy-3,6-disulfonaphthalin | 2-(2'-Methyl-5'-sulfophenyl-amino)-4,6-difluortriazin |
| 47 | 1-Hydroxy-3,6-disulfonaphthalin | 2-(2'-Chlor-4'-sulfophenyl-amino)-4,6-difluortriazin |
| 48 | 1-Hydroxy-3,6-disulfonaphthalin | 2-(2'-Sulfo-4'-methoxyphenyl-amino)-4,6-difluortriazin |
| 49 | 1-Hydroxy-3,6-disulfonaphthalin | 2-(2'-Sulfo-phenylamino)-4,6-difluortriazin |
| 50 | 1-Hydroxy-3,6-disulfonaphthalin | 2-(6'-Sulfonaphthylamino)-4,6-difluortriazin |
| 51 | 1-Hydroxy-3,6-disulfonaphthalin | 2-Methoxyethoxy-4,6-difluor-triazin |
| 52 | 1-Hydroxy-3,6-disulfonaphthalin | 2-Amino-4,6-dichlor-triazin |
| 53 | 1-Hydroxy-3,6-disulfonaphthalin | 2-Methylamino-4,6-dichlor-triazin |
| 54 | 1-Hydroxy-3,6-disulfonaphthalin | 2-Phenylamino-4,6-dichlor-triazin |
| 55 | 1-Hydroxy-3,6-disulfonaphthalin | 2-(3'-Sulfophenylamino)-4,6-dichlortriazin |
| 56 | 1-Hydroxy-3,6-disulfonaphthalin | 2-(4'-Sulfophenylamino)-4,6-dichlor-triazin |
| 57 | 1-Hydroxy-3,6-disulfonaphthalin | 2-(2'-Methyl-5'-sulfophenyl-amino)-4,6-dichlor-triazin |
| 58 | 1-Hydroxy-3,6-disulfonaphthalin | 2-N-Methylphenylamino-4,6-dichlor-triazin |
| 59 | 1-Hydroxy-3,6-disulfonaphthalin | 2,4,6-Trifluor-5-chlor-pyrimidin |
| 60 | 1-Hydroxy-4,8-disulfonaphthalin | 2,4-Difluor-5,6-dichlor-pyrimidin |
| 61 | 1-Hydroxy-4,8-disulfonaphthalin | 2-Amino-4,6-difluortriazin |
| 62 | 1-Hydroxy-4,8-disulfonaphthalin | 2-(3'-Sulfophenylamino)-4,6-difluor-triazin |
| 63 | 1-Hydroxy-4,8-disulfonaphthalin | 2-(4'-Sulfophenylamino)-4,6-difluor-triazin |

| Beispiel | Endkomponente | Reaktivkomponente |
|---|---|---|
| 64 | 1-Hydroxy-4,8-disulfonaphthalin | 2-(2'-Methyl-3-sulfophenylamino)-4,6-difluortriazin |
| 65 | 1-Hydroxy-4,8-disulfonaphthalin | 2-(2'-Chlor-4'-sulfophenylamino)-4,6-difluortriazin |
| 66 | 1-Hydroxy-4,7-disulfonaphthalin | 2,4,6-Trifluor-5-chlor-pyrimidin |
| 67 | 1-Hydroxy-4,7-disulfonaphthalin | 2-(2'-Sulfophenylamino)-4,6-difluor-triazin |
| 68 | 1-Hydroxy-4,7-disulfonaphthalin | 2-(3'-Sulfophenylamino)-4,6-difluor-triazin |
| 69 | 1-Hydroxy-5-sulfonaphthalin | 2-(2'-Sulfophenylamino)-4,6-difluor-triazin |
| 70 | 1-Hydroxy-4-sulfonaphthalin | 2-(2'-Sulfophenylamino)-4,6-difluor-triazin |
| 71 | 2-Hydroxy-3,6-disulfonaphthalin | 2-Amino-4,6-difluortriazin |
| 72 | 2-Hydroxy-5,7-disulfonaphthalin | 2-Amino-4,6-difluortriazin |

Beispiel 73

91,4 g Disazofarbstoff der Formel

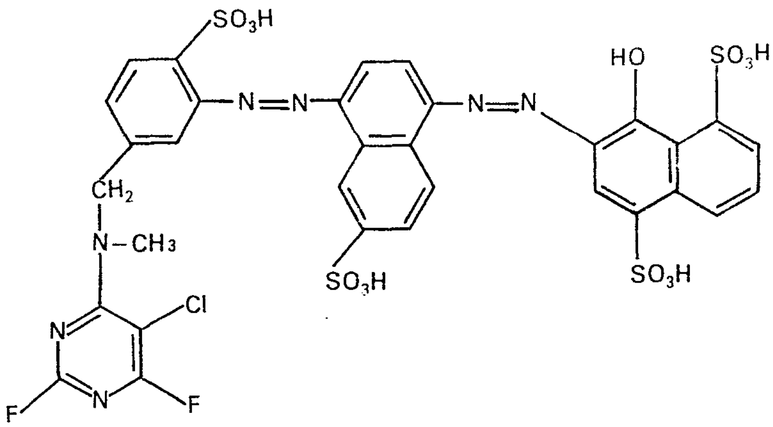

werden in 1000 ml Wasser gelöst. Man setzt 28 g $CuSO_4 \cdot 5H_2O$ und 42 g $NaAc \cdot 3H_2O$ zu und tropft eine 3%ige $H_2O_2$-Lösung hinzu, bis das Dünnschichtchromatogramm das Ende der oxydativen Kupferung anzeigt. Der Farbstoff wird mit Kochsalz ausgesalzen, abfiltriert und getrocknet. Nach dem Mahlen erhält man ein dunkles Pulver, das sich mit grünstichig blauer Farbe in Wasser löst. Nach einem der für Reaktivfarbstoffe üblichen Applikationsverfahren erhält man damit auf Baumwolle grünstichig blaue Färbungen von guter Licht- und Nassechtheit. Der Farbstoff ist ätzbar.

Der Farbstoff ist identisch mit dem nach Beispiel 37 hergestellten Farbstoff.

Der Ausgangsfarbstoff wird erhalten, indem man 1-Amino-2-sulfo-5-methylamino-methylbenzol in wässriger Phase bei 0° und pH 8,5–8,7 mit 2,4,6-Trifluor-5-chlor-pyrimidin selektiv an der aliphatischen Aminogruppe acyliert. Daraus wird die Diazoverbindung hergestellt und diese in schwach saurem Medium mit 1-Amino-6-sulfonaphthalin gekuppelt. Der resultierende Aminoazofarbstoff wird diazotiert und im bicarbonatalkalischem Medium auf 1-Hydroxy-4,8-disulfonaphthalin gekuppelt.

**Patentansprüche**

1. Kupferkomplexe von Disazofarbstoffen der Formel

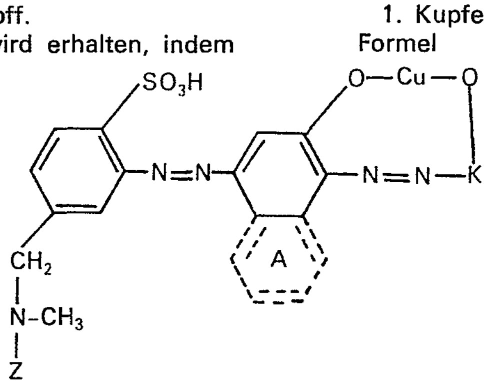

worin

Z = Mono-, Di- oder Trihalogenpyrimidinylrest, Mono- oder Dihalogentriazinylrest,

K = Rest einer 1-Hydroxy- oder 2-Hydroxy-naphthalinsulfonsäure und

der Benzol- oder Naphthalinkern A gegebenenfalls weitere Substituenten der Reihe Chloratome, $C_1$–$C_4$-Alkyl, $C_1$–$C_4$-Alkoxy- und Sulfogruppen enthält.

2. Kupferkomplexe von Disazofarbstoffen der Formel

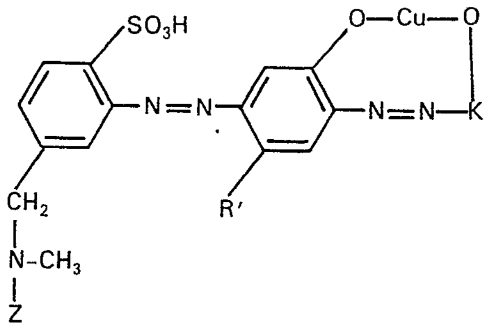

worin
R' = H oder $CH_3$ und
Z und K die in Anspruch 1 angegebene Bedeutung haben.

3. Kupferkomplexe von Disazofarbstoffen der Formel

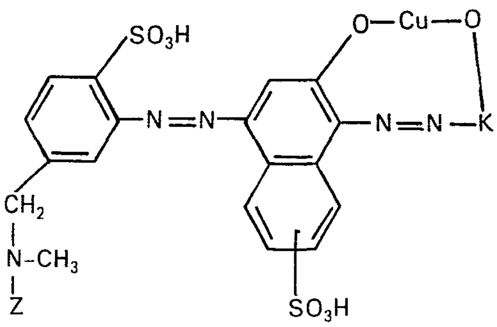

worin
Z und K die in Anspruch 1 angegebene Bedeutung haben.

4. Farbstoffe der Ansprüche 1, 2 und 3, in denen
Z = 2-Fluor-5,6-dichlor-pyrimidinyl-4,
2,6-Difluor-5-chlor-pyrimidinyl-4,
2-Fluor-4-amino-triazinyl-6,
2-Fluor-4-methylamino-triazinyl-6,
2-Fluor-4-(2',3'- oder 4'-sulfophenylamino)-triazinyl-6,
2-Fluor-4-(2'-methyl-4'- oder 5'-sulfophenylamino)-triazinyl-6,
2-Fluor-4-(2'-chlor-4'- oder 5'-sulfophenylamino)-triazinyl-6,
2-Fluor-4-(2'-sulfo-4'-methoxyphenylamino)-triazinyl-6.

**Claims**

1. Copper complexes of disazo dyestuffs, of the formula

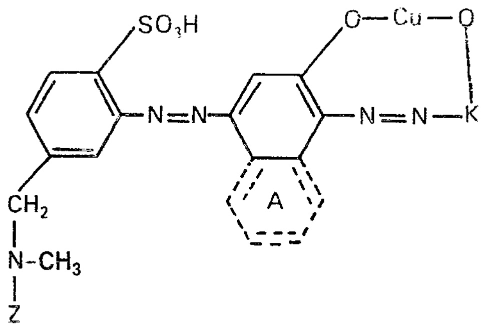

wherein
Z = a mono-, di- or tri-halogenpyrimidinyl radical or a mono- or di-halogenotriazinyl radical,
K = the radical of a 1-hydroxy- or 2-hydroxynaphthalene-sulphonic acid and
the benzene or naphthalene nucleus A optionally contains further substituents from the series comprising chlorine atoms and $C_1$–$C_4$-alkyl, $C_1$–$C_4$-alkoxy and sulpho groups.

2. Copper complexes of disazo dyestuffs, of the formula

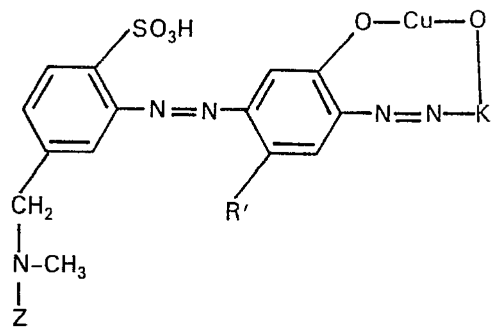

wherein
R' = H or $CH_3$ and
Z and K have the meaning given in Claim 1.

3. Copper complexes of disazo dyestuffs, of the formula

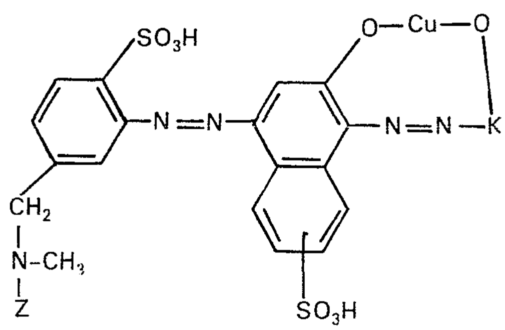

wherein
Z and K have the meaning indicated in Claim 1.

4. Dyestuffs of Claims 1, 2 and 3, in which
Z denotes
2-fluoro-5,6-dichloro-pyrimidin-4-yl,
2,6-difluoro-5-chloro-pyrimidin-4-yl,
2-fluoro-4-amino-triazin-4-yl,
2-fluoro-4-methylamino-triazin-4-yl,
2-fluoro-4-(2'-, 3'- or 4'-sulphophenylamino)-triazin-4-yl,
2-fluoro-4-(2'-methyl-4'- or -5'-sulphophenylamino)-triazin-4-yl,
2-fluoro-4-(2'-chloro-4'- or -5'-sulphophenylamino)-triazin-4-yl
or 2-fluoro-4-(2'-sulpho-4'-methoxyphenylamino)-triazin-4-yl.

**Revendications**

1. Complexes de cuivre de colorants disazoïques de formule:

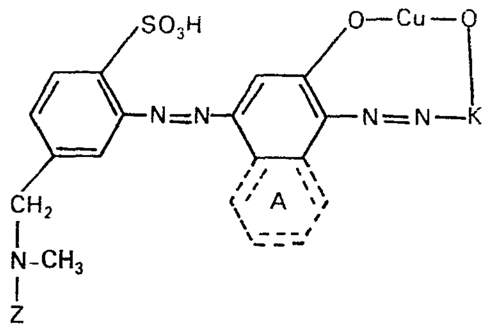

dans laquelle:
Z = reste mono-, di- ou triahlogénopyrimidinyle, reste mono- ou dihalogénotriazinyle,
K = reste d'un acide 1-hydroxy- ou 2-hydroxy-naphtalènesulfonique et
le noyau benzénique ou naphtalénique A porte éventuellement d'autres substituants de la série d'atomes de chlore, de groupes alkyle en $C_1$ à $C_4$, alkoxy en $C_1$ à $C_4$ et sulfo.

2. Complexes de cuivre de colorants disazoïques de formule:

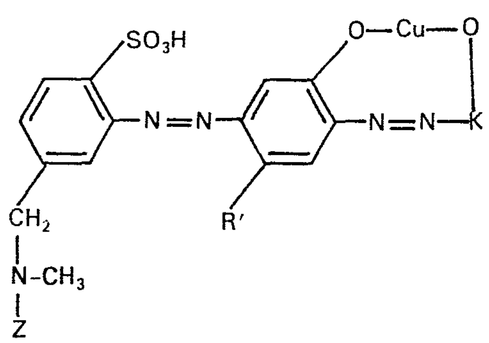

dans laquelle:
R' = H ou $CH_3$ et
Z et K ont la définition indiquée dans la revendication 1.

3. Complexes de cuivre de colorants disazoïques de formule:

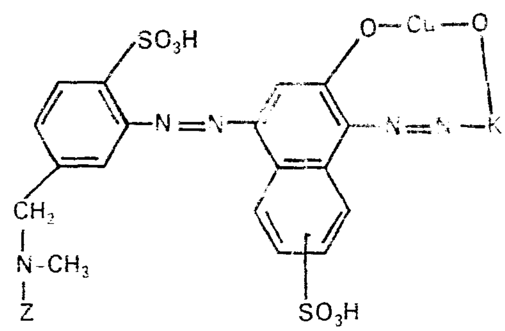

dans laquelle:
Z et K ont la définition indiquée dans la revendication 1.

4. Colorants suivant les revendications 1, 2 et 3, dans lesquels
Z = 2-fluoro-5,6-dichloropyrimidinyle-4,
2,6-difluoro-5-chloropyrimidinyle-4
2-fluoro-4-amino-triazinyle-4
2-fluoro-4-méthylaminotriazinyle-4
2-fluoro-4-(2',3'- ou 4'-sulfophénylamino)-triazinyle-4
2-fluoro-4-(2'-méthyl-4'- ou 5'-sulfophénylamino)-triazinyle-4
2-fluoro-4-(2'-chloro-4'- ou 5'-sulfophénylamino)-triazinyle-4
2-fluoro-4-(2'-sulfo-4'-méthoxyphénylamino)-triazinyle-4.